# EUROPÄISCHE PATENTANMELDUNG

(11) **EP 4 435 061 A1**
(43) Veröffentlichungstag der Anmeldung: **25.09.2024**
(21) Anmeldenummer: 23162880.1
(22) Anmeldetag: 20.03.2023
(51) Int. Cl.: C09D 5/00, C09D 7/42, C09D 7/61, C09D 7/40, E06B 7/23

(54) **EINRICHTUNG ZUM VERSCHLIESSEN EINER RAUMÖFFNUNG, DICHTUNGSGLIED ZUM VERSCHLIESSEN EINER RAUMÖFFNUNG UND BESCHICHTUNG FÜR DICHTUNGSGLIEDER**

(71) Anmelder: Air-lux technik ag, 9032 Engelburg (CH)
(72) Erfinder: Brönimann, Roman, 9602 Bazenheid (CH); Schneider, Toni, 8400 Winterthur (CH); Winkler, Martin, 8854 Galgenen (CH)
(74) Vertreter: Hepp Wenger Ryffel AG

(57) **Zusammenfassung**

Einrichtung (1) zum Verschliessen einer Raumöffnung (2), wobei die Einrichtung (1) einen Rahmen (5), mindestens einen Flügel (15, 150) sowie ein verformbares und/oder bewegbares Dichtungsglied (25, 250) umfasst. Das Dichtungsglied (25, 250) weist ein Material mit mindestens einem Weichmacher auf. Der Rahmen (5) ist zur Anordnung in einer Leibung (10) einer Raumöffnung (2) ausgeführt. Der Flügel (15, 150) ist bezüglich des Rahmens (5) zwischen einer geöffneten und einer geschlossenen Stellung bewegbar. In der geschlossenen Stellung besteht noch ein Spalt zwischen dem Rahmen (5) und dem Flügel (15, 150). Das Dichtungsglied (25, 250) ist zumindest im Wesentlichen in dem Spalt angeordnet. Das Dichtungsglied (25, 250) weist eine Beschichtung (26) auf, wobei die Beschichtung (26) umfasst: - einen Binder, insbesondere umfassend ein Polymer und ein Vernetzer, - ein Füllmaterial, und - bevorzugt eine Hydrophobierungskomponente.

## Beschreibung

Die Erfindung betrifft eine Einrichtung zum Verschliessen einer Raumöffnung, wobei die Einrichtung ein Dichtungsglied umfassend eine Beschichtung aufweist, ein Dichtungsglied zum Abdichten einer Einrichtung zum Verschliessen einer Raumöffnung, und eine Beschichtung für Dichtungsglieder zum Abdichten einer Einrichtung zum Verschliessen einer Raumöffnung, gemäss dem Oberbegriff der unabhängigen Ansprüche.

Einrichtungen zum Verschliessen einer Raumöffnung umfassend ein Dichtungsglied sind bekannt.

DE 10239253 A1 offenbart Verschlusselemente, mit elastischen Elementen, für Tür- und Fensteröffnungen in Gebäuden. Die elastischen Elemente sind im Querschnitt kreisförmig und mit Gas aufblasbar. Die elastischen Elemente passen in Fugen an den Rändern der starren Verschlusselemente.

CN 114000811 A offenbart eine Tür- oder Fensterdichtungsstruktur, die einen Rahmen, einen Sektor und einen Dichtungsmechanismus umfasst. Der Rahmen ist mit einem zu öffnenden Sektor versehen. Der Dichtungsmechanismus ist in dem Rahmen an dem Kontakt des Rahmens und des Sektors montiert. Der Dichtungsmechanismus umfasst einen Aufblasstreifen, einen Begrenzungsstreifen, ein Ventil, einen Motor, einen Druckmonitor und eine Steuerung, wobei der Aufblasstreifen an dem Rahmen montiert ist.

DE 10 2004 002 595 A1 offenbart eine Beschichtung zum Abdichten von Gummi- und Kunststoffoberflächen, wobei eine Ausdünstung eines Weichmachers vermindert wird.

Alle diese bekannten Lösungen sind mit dem Nachteil behaftet, dass die Dichtungen im Lauf der Zeit eine Klebrigkeit entwickeln, was zu einer Erschwerung des Öffnungsvorgangs sowie zu einer Geräuschbildung führt.

Es ist eine Aufgabe der Erfindung, die Nachteile des Standes der Technik zu überwinden, insbesondere ein hochwertigeres, flexibleres und/oder langlebigeres Dichtungsglied zu realisieren.

Diese Aufgabe wird durch die in den unabhängigen Patentansprüchen definierten Einrichtungen, Dichtungsglieder und Beschichtungen gelöst. Weitere Ausführungsformen ergeben sich aus den abhängigen Patentansprüchen.

Eine erfindungsgemässe Einrichtung umfasst einen Rahmen, mindestens einen Flügel sowie ein verformbares und/oder bewegbares Dichtungsglied. Das Dichtungsglied weist ein Material mit mindestens einem Weichmacher auf. Der Rahmen ist zur Anordnung in einer Leibung einer Raumöffnung ausgeführt. Der Flügel ist bezüglich des Rahmens zwischen einer geöffneten und einer geschlossenen Stellung, in der noch ein Spalt zwischen dem Rahmen und dem Flügel besteht, bewegbar. Das Dichtungsglied ist zumindest im Wesentlichen in dem Spalt angeordnet. Das Dichtungsglied weist eine Beschichtung auf. Die Beschichtung umfasst einen Binder, ein Füllmaterial, und bevorzugt eine Hydrophobierungskomponente. Der Binder umfasst insbesondere ein Polymer und einen Vernetzer.

Es hat sich gezeigt, dass ausgetretener Weichmacher massgeblich für die Klebrigkeit und damit das Anhaften des Dichtungsgliedes auf dem Rahmen verantwortlich ist. Die Beschichtung des Dichtungsgliedes reduziert die mögliche Anhaftung des Dichtungsgliedes am Rahmen, insbesondere wenn das Dichtungsglied an den Rahmen gedrückt wird.

Eine reduzierte Anhaftung des Dichtungsgliedes auf dem Rahmen führt auch zu einem reduzierten Ablösegeräusch beim Ablösen des Dichtungsgliedes vom Rahmen beim Übergang des Flügels von einer geschlossenen Position zu einer offenen Position.

Der Flügel ist bevorzugt in einer horizontalen Richtung schiebbar oder in einer vertikalen Richtung versenkbar. Alternativ ist der Flügel, um eine vertikale oder eine horizontale Achse, schwenkbar. Die Achse kann insbesondere auch mittig im Flügel angeordnet sein.

Der Flügel kann für sichtbare Licht durchsichtiges oder undurchsichtiges Material, insbesondere Glas aufweisen oder als Paneel gefertigt sein.

Die Raumöffnung kann in einer Hauswand angeordnet sein und beispielsweise durch ein Mauerwerk gebildet sein. Die Hauswand kann insbesondere eine Aussenwand eines Gebäudes sein. In einer Variante kann die Wand auch eine Innenwand eines Gebäudes sein. Der Rahmen kann aus der Leibung hervorstehen oder in die seitliche Begrenzung der Raumöffnung versenkt angeordnet sein.

Das Dichtungsglied besteht bevorzugt aus einem Kunststoffmaterial wie EPDM oder aus Gummi. Bevorzugt weist das Dichtungsglied einen gerundeten Querschnitt auf.

Bevorzugt ist das Dichtungsglied zumindest teilweise, besonders bevorzugt vollständig umlaufend am Flügel oder am Rahmen angeordnet, so dass es in der geschlossenen Stellung des Flügels zumindest im Wesentlichen, bevorzugt vollständig, im Spalt zwischen dem Rahmen und dem Flügel liegt. Alternativ kann das Dichtungsglied auch in mehrere Segmente unterteilt sein.

Das Dichtungsglied ist bevorzugt ein aufblasbares Dichtungsglied, welches bevorzugt mittels einer Betätigungseinrichtung betätigbar ist, zum Beispiel durch Aufblasen.

Der Binder besteht bevorzugt nur aus dem Polymer und dem Vernetzer.

Vorzugsweise ist die chemische Struktur des Binders so gewählt, dass er gute Haftung auf dem Dichtungsglied zeigt. Die Haftung des Binders auf dem Dichtungsglied kann durch chemische Kompatibilitäten, beispielsweise ähnliche Polaritäten von Polymer des Binders mit dem Dichtungsglied (Substrat), erfolgen. Ähnliche Polaritäten können zu Wasserstoffbrücken, Dipol-Dipol-oder auch van der Waals Wechselwirkungen führen. Zudem kann die Haftung abhängig sein von einer Vorbehandlung wie Aufrauen und/oder Reinigen, insbesondere kann die Haftung durch die Vorbehandlung verbessert werden.

Vorzugsweise ist die Struktur des Binders so gewählt, dass er die Diffusion von kleinen Molekülen, vorzugsweise von Weichmachern, verhindert oder verzögert.

Die Hydrophobierungskomponente dient zur Hydrophobierung der Beschichtung, insbesondere der Oberfläche der Beschichtung. Durch die Hydrophobierung ist die Beschichtung gegen das Eindringen von Wasser/Feuchtigkeit geschützt und die Oberfläche der Beschichtung ist wasserabweisend.

Bevorzugt ist das Dichtungsglied ein Dichtungsglied in Form eines hohlen Profils oder Schlauchs. Der Hohlraum des Dichtungsglieds ist zur Aufnahme eines Fluids oder eines Gases ausgebildet, das von einem Kompressor selektiv unter Druck gesetzt werden kann.

Das Dichtungsglied kann in mehrere Segmente unterteilt sein. Die Segmente müssen nicht direkt miteinander fluid- oder gasverbunden sein. Mehrere Segmente können von einem Kompressor gemeinsam oder einzeln selektiv unter Druck gesetzt werden.

Bevorzugt ist die Hydrophobierungskomponente derart ausgebildet, dass sie sich an der Grenzfläche des Binders zum umgebenden Medium, insbesondere an der Grenzfläche des Binders zum Füllmaterial, anreichert.

Insbesondere wird eine Hydrophobierungskomponente gewählt, die sich an der Grenzfläche des Binders aufgrund der Art der Wechselwirkungen anreichert, die die Komponenten der Hydrophobierungskomponente mit der Umgebung ausbilden. Die Hydrophobierungskomponenten bilden insbesondere Dispersionswechselwirkungen aus. Daher passen diese Komponenten besonders gut zu hydrophoben Molekülen, die im Material der Dichtung nicht oder zumindest kaum vorhanden sind. Luft dagegen ist ein völlig unpolares Medium (N2, 02...) Damit sind die dispersiven Wechselwirkungen der Hydrophobierungskomponenten mit Luft am besten, weshalb sie sich an der Grenzfläche anreichern. Da die Hydrophobierungskomponenten aber chemisch mit dem Binder mitvernetzen, werden sie an der Grenzfläche gehalten und können nicht ausgewaschen werden.

Bevorzugt weist die Hydrophobierungskomponente eine siliziumhaltige oder eine fluorierte oder eine Silikon Seitenkette auf.

Bevorzugt umfasst der Binder ein Polyol und ein Polyisocyanat oder besteht daraus.

Der Binder kann einfärbbar oder eingefärbt sein.

Durch das Einfärben des Binders ist die Farbe der Beschichtung bestimmbar. Beispielsweise ist die Farbe der Beschichtung, durch das Einfärben des Binders, anpassbar an die Farbe des Rahmens.

Das Polymer des Binders ist bevorzugt derart ausgebildet, dass es eine kovalente Bindung zum Füllmaterial und zur Hydrophobierungskomponente eingehen kann.

Bevorzugt ist die Glasübergangstemperatur des Binders kleiner als die normal herrschenden Betriebstemperaturen am Verwendungsort der Einrichtung zum Verschliessen einer Raumöffnung. Besonders bevorzugt ist die Glasübergangstemperatur kleiner als die tiefste zu erwartende Temperatur am Verwendungsort der Einrichtung zum Verschliessen einer Raumöffnung.

Bevorzugt weist der ausgehärtete Binder daher eine Glasübergangstemperatur T_{g} von unter 0°C, bevorzugt unter -10°C, auf.

Polyurethane sind beispielsweise vorteilhaft als Binder mit einer tiefen Glasübergangstemperatur.

Bevorzugt weist der ausgehärtete Binder ein Speichermodul von mindestens 4 MPa, bevorzugt mindestens 6 MPa, bei 20°C auf.

Bevorzugt weist der ausgehärtete Binder eine Bruchdehnung von mindestens A = 30%, bevorzugt mindestens A = 60%, besonders bevorzugt mindestens A =80% auf. Die Bruchdehnung beträgt maximal A = 200%.

Das Dichtungsglied ist verformbar. Damit die Beschichtung beim Verformen des Dichtungsglieds nicht bricht, ist es besonders vorteilhaft, dass der ausgehärtete Binder, und darum die Beschichtung, eine grosse Bruchdehnung aufweist.

In einer bevorzugten Ausführungsform der Einrichtung weist das Füllmaterial Partikel auf, von denen mindestens ein Teil eine maximale Dimension zwischen 5 µm und 40 µm, bevorzugt zwischen 10 µm und 30 µm, aufweisen.

Bevorzugt umfasst die Oberfläche der Partikel des Füllmaterials Si-OH Gruppen. Diese OH-Gruppen, genauso wie die OH-Gruppen des Polyols im Binder, reagieren mit dem Vernetzer. Damit werden die Partikel kovalent mit dem Binder verbunden.

Falls die Oberfläche der Partikel keine oder kaum Si-OH Gruppen aufweist, können diese nochmals chemisch verändert werden, damit eine kovalente mit dem Bindemittel möglich ist.

Vorzugsweise werden die Partikel durch ein Mattierungsmittel für Farben und Lacke gebildet.

Bevorzugt weisen die Partikel eine maximale Dimension auf, die im Median zwischen 5 µm und 40 µm liegt, bevorzugt zwischen 10 µm und 30 µm.

In einer bevorzugten Ausführungsform der Einrichtung weist das Füllmaterial anorganische Partikel auf oder besteht daraus. Insbesondere weist das Füllmaterial siliziumhaltige Partikel, besonders bevorzugt SiO₂-Partikel, auf oder besteht daraus.

Eine Beschichtung, die SiO2 Partikel enthält, hemmt das Austreten von Weichmachern aus dem beschichtetem Dichtungsglied besonders wirkungsvoll.

In einer bevorzugten Ausführungsform der Einrichtung ist die Menge und Grösse von Partikeln des Füllmaterials derart gewählt, dass diese der Oberfläche der Beschichtung eine unebene Struktur verleihen. Bevorzugt verleiht diese der Oberfläche der Beschichtung einen Mittenrauwert Ra zwischen 1 µm und 20 µm, besonders bevorzugt zwischen 1 µm und 10 µm.

Die Partikel minimieren die Kontaktfläche zwischen dem beschichtetem Dichtungsglied und Rahmen.

In einer bevorzugten Ausführungsform der Einrichtung weist die Beschichtung ein Volumenverhältnis zwischen dem Füllmaterial und dem Binder von mindestens 3%, bevorzugt von mindestens 7%, besonders bevorzugt von mindestens 12% auf. Das Volumenverhältnis beträgt maximal 60%.

Das Volumenverhältnis bezieht sich auf den Binder in ausgehärtetem Zustand.

In einer bevorzugten Ausführungsform der Einrichtung beträgt das Volumenverhältnis mindestens 35%, bevorzugt mindestens 55%, besonders bevorzugt mindestens 75% des kritischen Volumenverhältnisses. Das Volumenverhältnis beträgt maximal 100% des kritischen Volumenverhältnisses.

Das kritische Volumenverhältnis gibt das Volumenverhältnis des Füllmaterials zum Binder an, bei dem das gesamte Füllmaterial gerade noch vom Bindemittel benetzt wird.

Das kritische Volumenverhältnis bezieht sich auf den Binder in ausgehärtetem Zustand.

Ein weiterer Aspekt der vorliegenden Erfindung betrifft ein Dichtungsglied zum Abdichten einer Einrichtung zum Verschliessen einer Raumöffnung, vorzugsweise zum Abdichten einer Einrichtung zum Verschliessen einer Raumöffnung nach einer der bevorzugten Ausführungsformen. Das Dichtungsglied ist verformbar. Das Dichtungsglied weist ein Material mit mindestens einem Weichmacher auf. Das Dichtungsglied weist eine Beschichtung auf. Die Beschichtung umfasst einen Binder, ein Füllmaterial, und bevorzugt eine Hydrophobierungskomponente. Der Binder umfasst insbesondere ein Polymer und ein Vernetzer.

Ein weiterer Aspekt der vorliegenden Erfindung betrifft eine Beschichtung für Dichtungsglieder zum Abdichten einer Einrichtung zum Verschliessen einer Raumöffnung, vorzugsweise zum Abdichten einer Einrichtung zum Verschliessen einer Raumöffnung nach einer der bevorzugten Ausführungsformen. Die Beschichtung umfasst einen Binder, ein Füllmaterial, und bevorzugt eine Hydrophobierungskomponente. Der Binder umfasst insbesondere ein Polymer und ein Vernetzer.

Die Beschichtung ist vorzugsweise auf Dichtungsglieder durch Pinseln auftragbar.

Anhand der Figuren, welche lediglich Ausführungsbeispiele darstellen, wird die Erfindung im Folgenden näher erläutert. Die Figuren zeigen:
- Fig. 1:: eine schematische Darstellung einer erfindungsgemässen Einrichtung mit Schiebeflügeln,
- Fig. 2:: die Einrichtung aus Figur 1 umfassend eine Betätigungseinrichtung.
- Fig. 3:: Auswirkung auf das Ablösegeräusch von der Beschichtung in Abhängigkeit des Füllmaterials.

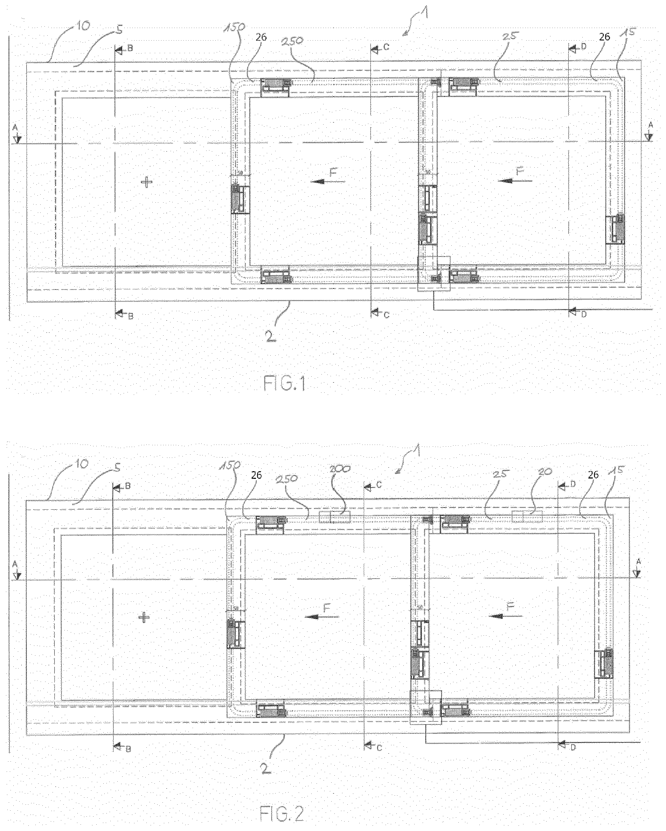

**Figur 1** zeigt eine Einrichtung 1 zum Verschliessen einer Raumöffnung 2. Ein Rahmen 5 ist in einer Leibung 10 der Raumöffnung 2 gebildet und an allen Seiten der Raumöffnung 2 angeordnet. Ein erster Schiebeflügel 15 und ein zweiter Schiebeflügel 150 befinden sich in einer geschlossenen Stellung.

Ein erstes Dichtungsglied 25 ist umlaufend am ersten Schiebeflügel 15 angeordnet. Ein zweites Dichtungsglied 250 ist U-förmig am zweiten Schiebeflügel 150 angeordnet. Die Schiebeflügel 15, 150 sind in die Schieberichtung F unabhängig voneinander in eine geöffnete Stellung verschiebbar.

Das erste Dichtungsglied 25 und das zweite Dichtungsglied 250 weisen eine Beschichtung 26 auf. Die Beschichtung 26 besteht aus einen Binder und ein Füllmaterial.

Tabelle 1 zeigt zwei Varianten der Beschichtung und deren Zusammensetzung.

**Tabelle 1**

| Beschichtung Variante: | A | | B |
|---|---|---|---|
| Binder | Der Binder besteht aus: | | Gleich wie für Beschichtungsvaria nte A |
| | | • Polytetrahydrofuran 650 S von BASF (Polyol), | |
| | | • Desmophen 670 BA von Covestro AG (Polyol), und | |
| | | • Desmodur ultra N 3300 von Covestro AG (Isocyanat-Vernetzer) . | |
| Füllmaterial | Acematt HK 440 von Evonik Resource Efficiency GmbH | | SYLOID ED 80 von Grace GmbH & Co |
| Volumenverhältnis (zwischen dem Füllmaterial und dem ausgehärteten Binder) | 9.8% | | 12.1% |

Das kritische Volumenverhältnis der Komponenten von Variante A beträgt 12.5%. Die Variante A der Beschichtung 26 hat einen Füllgrad von 78.4%, entsprechend dem Volumenverhältnis (9.8%) dividiert durch das kritische Volumenverhältnis (12.5%). Für einen Füllgrad zwischen 78.4% und 100% wird das Ablösegeräusch beim Ablösen des mit der Variante A beschichteten Dichtungsgliedes vom Rahmen verhindert (für einen Mensch nicht hörbar).

Ein Füllgrad über 100% verschlechtert die mechanischen Eigenschaften der Beschichtung. Insbesondere macht er die Beschichtung brüchig.

Das kritische Volumenverhältnis der Komponenten von Variante B beträgt 13.7%. Die Variante B der Beschichtung 26 hat einen Füllgrad von 88.3%, entsprechend dem Volumenverhältnis (12.1%) dividiert durch das kritische Volumenverhältnis (13.7%). Für einen Füllgrad zwischen 88.3% und 100% wird das Ablösegeräusch beim Ablösen des mit der Variante B beschichteten Dichtungsgliedes vom Rahmen verhindert (für einen Mensch nicht hörbar).

Die Variante A der Beschichtung verhindert das Ablösegeräusch bei tieferem Füllgrad als die Variante B. Ein tieferer Füllgrad führt zu einer Flexibleren und/oder Strapazierfähigeren Beschichtung. Die höhere Flexibilität und/oder Strapazierfähigkeit ist auf einen höheren Anteil an Binder in der Beschichtung zurückzuführen.

**Figur 2** zeigt die Einrichtung 1 aus Figur 1, wobei zusätzlich an dem ersten Schiebeflügel 15 eine erste Betätigungseinrichtung 20 und an dem zweiten Schiebeflügel eine zweite Betätigungseinrichtung 200 angeordnet ist. Die schon beschriebenen Elemente werden hier nicht nochmals beschrieben. Das erste Dichtungsglied 25 und das zweite Dichtungsglied 250 sind aufblasbar. Anhand der ersten Betätigungseinrichtung 20 wird das Beschichtete 26 erste Dichtungsglied 25 betätigt. Analog zur ersten Betätigungseinrichtung 20, ist die zweite Betätigungseinrichtung 200 dazu ausgebildet das zweite Dichtungsglied 250 zu betätigen.

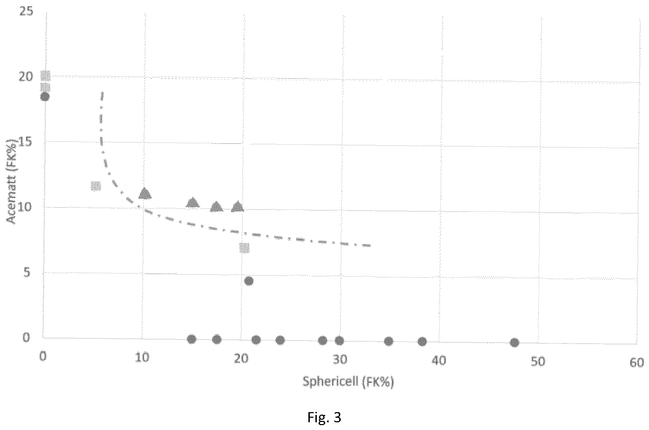

**Figur 3** zeigt die Auswirkung der Beschichtung auf das Ablösegeräusch in Abhängigkeit des Füllmaterials in einer Variante C. Das Füllmaterial besteht aus einer Mischung von Acematt HK 440 und Sphericel 110P8 von Lehmann & Voss & Co. Der Binder besteht aus Polytetrahydrofuran 650 S von BASF (Polyol), Desmophen 670 BA von Covestro AG (Polyol), und Desmodur ultra N 3300 von Covestro AG (Isocyanat-Vernetzer). Die Beschichtung besteht aus dem Binder, Acematt HK 440 und Sphericel 110P8. Die X-Achse gibt den Anteil an SYLOID ED 110P8 an. Die Y-Achse gibt den Anteil an Acematt HK 440 an. Der restliche Anteil an nichtflüchtigen Stoffen ist Binder.

Die angegebenen Dreiecke in Fig.3, welche sich rechts oberhalb der Punkt-gestrichelten Linie befinden (beispielsweise X = 20, Y = 10), sind Mischungen von Füllmaterial, welche zu keinen Ablösegeräusch führen. Die angegebenen Vierecke sind Mischungen von Füllmaterial welche zu einem geringen Ablösegeräusch führen. Die angegebenen Kreise sind Mischungen von Füllmaterial welche das Ablösegeräusch nicht verhindern.

## Patentansprüche

1. Einrichtung (1) zum Verschliessen einer Raumöffnung (2), wobei die Einrichtung (1) einen Rahmen (5), mindestens einen Flügel (15, 150) sowie ein verformbares und/oder bewegbares Dichtungsglied (25, 250) umfasst, wobei das Dichtungsglied (25, 250) ein Material mit mindestens einem Weichmacher aufweist, wobei der Rahmen (5) zur Anordnung in einer Leibung (10) einer Raumöffnung (2) ausgeführt ist und der Flügel (15, 150) bezüglich des Rahmens (5) zwischen einer geöffneten und einer geschlossenen Stellung bewegbar ist, in der noch ein Spalt zwischen dem Rahmen (5) und dem Flügel (15, 150) besteht, wobei das Dichtungsglied (25, 250) zumindest im Wesentlichen in dem Spalt angeordnet ist, **dadurch gekennzeichnet, dass** das Dichtungsglied (25, 250) eine Beschichtung (26) aufweist, wobei die Beschichtung (26) umfasst:
- einen Binder, insbesondere umfassend ein Polymer und ein Vernetzer,
- ein Füllmaterial, und
- bevorzugt eine Hydrophobierungskomponente.

2. Einrichtung nach Anspruch 1, wobei das Dichtungsglied (25, 250) ein Dichtungsglied in Form eines hohlen Profils oder Schlauchs ist, dessen Hohlraum zur Aufnahme eines Fluids oder eines Gases ausgebildet ist, das von einem Kompressor (20, 200) selektiv unter Druck gesetzt werden kann.

3. Einrichtung nach einem der Ansprüche 1 oder 2, wobei die Hydrophobierungskomponente derart ausgebildet ist, dass sie sich an der Grenzfläche des Binders zum umgebenden Medium, insbesondere an der Grenzfläche des Binders zum Füllmaterial, anreichert.

4. Einrichtung nach einem der Ansprüche 1 bis 3, wobei die Hydrophobierungskomponente eine siliziumhaltige oder eine fluorierte Seitenkette aufweist, wobei die Hydrophobierungskomponente bevorzugt aufgrund der besagten Seitenketten eine Hydrophobierung aufweist.

5. Einrichtung nach einem der Ansprüche 1 bis 4, wobei die Hydrophobierungskomponente eine Silikon-Seitenkette aufweist.

6. Einrichtung nach einem der Ansprüche 1 bis 5, wobei der Binder ein Polyol und ein Polyisocyanat umfasst oder daraus besteht.

7. Einrichtung nach einem der Ansprüche 1 bis 6, wobei der Binder einfärbbar ist.

8. Einrichtung nach einem der Ansprüche 1 bis 7, wobei das Polymer des Binders derart ausgebildet ist, dass es eine kovalente Bindung zum Füllmaterial und zur Hydrophobierungskomponente eingehen kann.

9. Einrichtung nach einem der Ansprüche 1 bis 8, wobei der ausgehärtete Binder eine Glasübergangstemperatur T_{g} von unter 0°C, bevorzugt unter -10°C, aufweist.

10. Einrichtung nach einem der Ansprüche 1 bis 9, wobei der ausgehärtete Binder ein Speichermodul von mindestens 4 MPa, bevorzugt mindestens 6 MPa, bei 20°C aufweist.

11. Einrichtung nach einem der Ansprüche 1 bis 10, wobei der ausgehärtete Binder eine Bruchdehnung von mindestens A = 30%, bevorzugt mindestens A = 60%, besonders bevorzugt mindestens A =80% aufweist, wobei die Bruchdehnung maximal A = 200% beträgt.

12. Einrichtung nach einem der Ansprüche 1 bis 11, wobei das Füllmaterial Partikel aufweist, von denen mindestens ein Teil eine maximale Dimension zwischen 5 µm und 40 pm, bevorzugt zwischen 10 µm und 30 pm, aufweisen.

13. Einrichtung nach einem der Ansprüche 1 bis 12, wobei das Füllmaterial Partikel aufweist, die eine maximale Dimension aufweisen, die im Median zwischen 5 µm und 40 pm, bevorzugt zwischen 10 µm und 30 pm, liegt.

14. Einrichtung nach einem der Ansprüche 1 bis 13, wobei das Füllmaterial anorganische Partikel, bevorzugt siliziumhaltige Partikel, besonders bevorzugt SiO₂-Partikel, aufweist oder daraus besteht.

15. Einrichtung nach einem der Ansprüche 1 bis 14, wobei die Menge und Grösse von Partikeln des Füllmaterials derart gewählt ist, dass diese der Oberfläche der Beschichtung (26) eine unebene Struktur verleihen, bevorzugt, dass diese der Oberfläche der Beschichtung (26) einen Mittenrauwert Ra zwischen 1 µm und 20 µm, besonders bevorzugt zwischen 1 µm und 10 pm, verleiht.

16. Einrichtung nach einem der Ansprüche 1 bis 15, wobei die Beschichtung (26) ein Volumenverhältnis zwischen dem Füllmaterial und dem Binder von mindestens 3%, bevorzugt von mindestens 7%, besonders bevorzugt von mindestens 12% aufweist, wobei das Volumenverhältnis maximal 60% beträgt.

17. Einrichtung nach Anspruch 16, wobei das Volumenverhältnis mindestens 35%, bevorzugt mindestens 55%, besonders bevorzugt mindestens 75% des kritischen Volumenverhältnisses, bei welchem das Füllmaterial gerade noch komplett von dem Binder benetzt wird, beträgt, wobei das Volumenverhältnis maximal 100% des kritischen Volumenverhältnisses beträgt.

18. Dichtungsglied (25, 250) zum Abdichten einer Einrichtung (1) zum Verschliessen einer Raumöffnung (2), vorzugsweise zum Abdichten einer Einrichtung (1) zum Verschliessen einer Raumöffnung (2) nach einem der Ansprüche 1 bis 17, wobei das Dichtungsglied (25, 250) verformbar und/oder bewegbar ist, wobei das Dichtungsglied (25, 250) ein Material mit mindestens einem Weichmacher aufweist, **dadurch gekennzeichnet, dass** das Dichtungsglied (25, 250) eine Beschichtung (26) aufweist, wobei die Beschichtung (26) umfasst:
- einen Binder, insbesondere umfassend ein Polymer und ein Vernetzer,
- ein Füllmaterial, und
- bevorzugt eine Hydrophobierungskomponente.

19. Beschichtung (26) für Dichtungsglieder (25, 250) zum Abdichten einer Einrichtung (1) zum Verschliessen einer Raumöffnung (2), vorzugsweise zum Abdichten einer Einrichtung (1) zum Verschliessen einer Raumöffnung (2) nach einem der Ansprüche 1 bis 17, wobei die Beschichtung (26) umfasst:
- einen Binder, insbesondere umfassend ein Polymer und ein Vernetzer,
- ein Füllmaterial, und
- bevorzugt eine Hydrophobierungskomponente.
